# EUROPEAN PATENT APPLICATION

(11) **EP 1 129 759 A1**
(43) Date of publication of application: **05.09.2001**
(21) Application number: 01830044.2
(22) Date of filing: 26.01.2001
(51) Int. Cl.: B01D 46/24

(54) **A dust filter for gas**

(30) Priority: 29.02.2000 IT MO200033
(71) Applicant: WAM S.p.A., 41030 Ponte Motta Cavezzo (Modena) (IT)
(72) Inventor: Marchesini, Vainer, 41030 San Prospero, Modena (IT)
(74) Representative: Gotra, Stefano

(57) **Abstract**

The dust filter for gases comprises a plurality of smooth cylindrical and coaxial filtering walls (2), arranged one internally of another, between each two of which coaxial chambers are afforded. Some of the chambers, connected to an inlet of polluted gas for purification, are arranged alternated with other chambers connected to an outlet (5) of purified gas. Each chamber is isolated, either from the inlet or the outlet, due to a presence of an annular seal (6) located at an end of the chamber. The filter is usefully applied in silos for containing granular or powder material. The filter is relatively small with respect to a filtering surface thereof.

## Description

### Description.

Specifically, though not exclusively, the invention can be usefully applied in silos for containing material in the form of grains or powders.

One of the problems of known filters for separating solids from airborne particles, used especially in the field of silos for elimination of dust and smoky powders polluting the air, is concerned with reducing the ratio between the volume occupied by the total filter and the active filtering surface.

A further problem of known dust filters is providing a low-cost filter cleaning system which is as small as possible as well as being as efficient as possible.

The main aim of the present invention is to make available a filter which is simple and economical to construct, with which the above-described problems in the prior art can be obviated.

An advantage of the invention is that it provides a filter of relatively small mass in ratio to the filtering surface.

A further advantage is that it enables efficient cleaning of the filters by means of a relatively economical and small filter system.

A still further advantage is that it provides a filter which can efficiently purify a large volume of gas.

A still further advantage is that it gives rise to a filter which can be easily installed on an external structure and which is solid and robust.

These aims and advantages and others besides are all attained by the invention as it is characterised in the claims that follow.

Further characteristics and advantages of the present invention will better emerge from the detailed description that follows of a preferred but non-exclusive embodiment of the invention, illustrated purely by way of nonlimiting example in the accompanying figures of the drawings, in which:

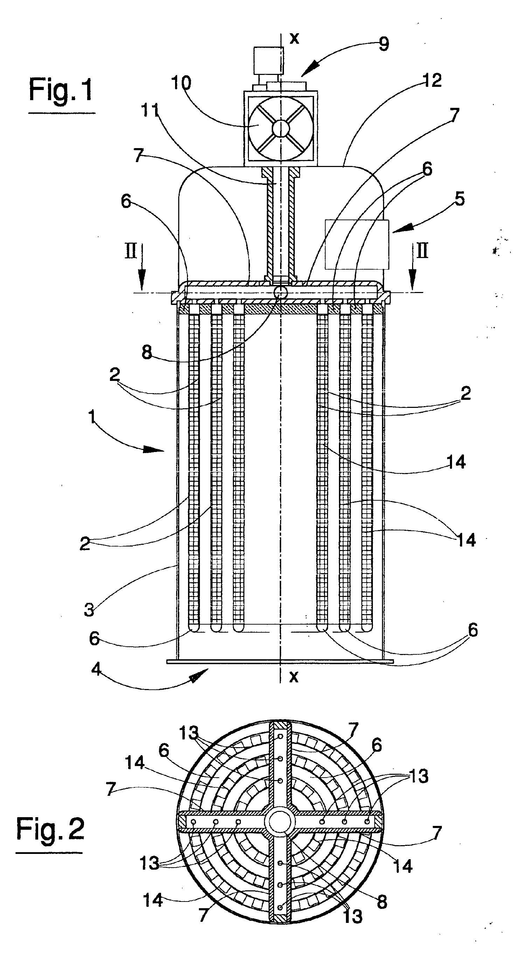

figure 1 is a lateral view, partly sectioned, of a filter made according to the present invention;
figure 2 is a section made according to line II-II of figure 1.

With reference to the figures, 1 denotes in its entirety a dust filter for gases, in particular applicable in silos for storing powder materials.

The filter 1 comprises at least three filtering walls 2, of the sleeve-type, which are coaxial and arranged one internally of another. In the specific case the filter 1 comprises six coaxial and cylindrical filtering walls 2. Each filtering wall 2 is made of a flexible material (for example, cloth or other) and exhibits external surfaces which are preferably smooth and lacking undulations.

The filtering walls 2 are arranged at a predetermined reciprocal distance, measured in a radial direction with respect to axis x-x of the filtering walls, so as to define at least two annular chambers each laterally delimited by two adjacent filtering walls. In the illustrated embodiment the six filtering walls 2 give overall rise to five annular and coaxial chambers, separate from each other and arranged one internally of another. At the centre there is a central chamber which is laterally delimited by the most internal of the filtering walls 2.

The filter comprises an external tubular covering 3, impermeable to gas, which constitutes the main filter support body. In the illustrated embodiment the covering 3 is cylindrical. The covering 3 closes in the various filtering walls 2 and is coaxial to them. The covering 3 is arranged at a predetermined distance (in a radial direction with respect to the axis of the filter) from the most external of the filtering walls 2, so as to define a peripheral annular chamber.

Each chamber, including both the annular chambers and the central chamber, exhibits a first end which faces a first side of the filter and a second end, opposite to the first, which is turned towards a second side of the filter. The first side of the filter exhibits an inlet 4 for the polluted gas and the second side of the filter exhibits an outlet 5 for the purified gas.

In the case of each chamber, one of the ends is closed by a seal, while the other end is open. Each chamber is therefore in communication with one of the sides of the filter and is isolated sealedly with respect to the other side. This is true both of the central chamber and the annular chambers, comprising the peripheral annular chamber.

In the illustrated embodiment the seal for each chamber comprises an annular element 6, made of plastic, which connects the two filtering walls 2 which delimit the chamber itself. The walls 2 have one end made solid to the annular element 6 by being buried into the material itself. This facilitates manufacturing of the seal, guarantees an effective seal and renders the whole filter structurally sturdier.

The seal is located in such a way that for each chamber in communication with one of the above-mentioned sides of the filter, the chamber or the chambers adjacent thereto are in communication with the other side of the filter. In the illustrated embodiment the seal of the central chamber is located so that the chamber is in communication with the first side of the filter and is sealedly isolated with respect to the second side. The central chamber is therefore open towards the inlet 4 of the filter and thus communicates with the polluted air, and is isolated from the purified air. On the other hand, the first annular chamber (meaning by this the most internal annular chamber, adjacent to the central chamber) is open towards the exit 5 of the filter, an is thus in communication with the purified air, and is isolated from the polluted air, as are the third and the fifth annular chambers. The second, the fourth and the sixth annular chambers are, like the central chamber, open towards the inlet 4 of the filter and closed towards the outlet 5 thereof.

In other words, in a radial direction, in the filter 1 structure the chambers connected with the inlet 4 alternate with those connected with the outlet 5.

The filter 1 comprises a plurality of conduits 7 for the compressed cleaning air, situated on the second side of the filter, i.e. at the side connected with the outlet 5 of the purified air. The cleaning conduits 7 are arranged radially with respect to the axis x-x of the chambers and lead into a central manifold 8 constituted by a chamber having an inlet which is connected with a compressed-air blower for cleaning the filter. The blower, of known type, is predisposed to generate on command a periodic jet of compressed air which crosses the filtering walls 2 in counter-current direction with respect to the gas to be purified, with the aim of detaching the solid particles separated by the filter and deposited on the filtering walls on the polluted-air side, so as to clean the filtering walls. The cleaning blower comprises a valve 9 which normally closes a connection between the inlet of the manifold 8 and a tank 10 of compressed air and which is commanded, by a timer, to open periodically. The tank 10 is connected to the manifold 8 through a pipe 11 which is coaxial to the filter and arranged internally of a cover 12 bearing the outlet 5 of the purified air which closes the filter on the opposite side to the inlet 4 of the polluted air.

Each conduit 7 is laterally provided with three outlet holes 13 for the cleaning compressed air, each of which is arranged facing respectively the first, the third and the fifth annular chamber. In this way each conduit 7 is connected, through the outlet holes 13, with the chambers communicating with the air purified by the filter.

Both the central manifold 8 and the radial conduits 7 which transport the compressed air are made in a single piece of plastic. The seal for the central chamber comprises a wall which is impermeable to gas made in a single piece with the manifold 8 and the compressed air transport conduits 7.

Internally of each annular chamber which is open towards the filter outlet 5, communicating with the purified air, there is a cylindrical corrugated grid 14.

In the illustrated embodiment the central manifold 8, the radial conduits 7, the wall for sealedly closing the central chamber and the annular elements 6 which sealedly close the second, the fourth and the sixth annular chambers (i.e. the chambers which are open towards the polluted air) form a single block, made by casting plastic material, which gives rise to a preferably-flanged head used for installing the filter in an external structure. The installation of the filter 1 might be done, for example, by fixing the head to an external plate by means of screws. The head also has the function of supporting the various filtering walls.

The special structure of the filter, having coaxial filtering walls, reduces the ratio between the total volume of the filter and the available filtering surface, and also enable filters of various shapes and sizes to be made modularly, with a considerable reduction of costs.

## Claims

1. A dust filter for gas, **characterised in that** it comprises at least two filtering walls (2) tubular in shape and coaxial, arranged one internally of another; the filtering walls (2) being arranged at a predetermined reciprocal distance, measuring radially with respect to an axis (x-x) of the filtering walls (2), so as to define at least one annular chamber, laterally delimited by two adjacent filtering walls (2), and a central chamber, laterally delimited by a most internal of the at least two filtering walls (2);
each chamber exhibiting a first end facing a first side of the filter which is connected to an inlet (4) of polluted gas to be purified and a second end, opposite to the first end, facing towards a second side of the filter which is connected to an outlet (5) for the polluted gas after purification thereof;
each chamber having one of the first and second ends which is closed by a seal (6) and having the other of the first and second ends open, so that each chamber is in communication with one of the sides of the filter (1) but sealedly isolated with respect to the other of the sides of the filter (1);
the seal being located so that, for each chamber in communication with one of the sides of the filter (1), the adjacent chamber or chambers is in communication with the other side of the filter (1).

2. The filter of claim 1, **characterised in that** it comprises three or more filtering walls (2) which define at least two annular chambers and a central chamber.

3. The filter of claim 1 or 2, **characterised in that** it comprises a tubular external covering (3) which is impermeable to gas and which closes the filtering walls (2), to which the covering (3) is coaxial, the covering (3) being arranged at a predetermined distance from a most external of the filtering walls (2) measuring in a radial direction from the axis (x-x), so as to define a peripheral chamber which is in communication with one the sides of the filter (1) and sealedly isolated from the other side of the filter (1).

4. The filter of any one of the preceding claims, **characterised in that** the seal (6) of the central chamber is located in such a way that the central chamber is in communication with the first side of the filter (1) and is sealedly isolated from the second side of the filter (1).

5. The filter of any one of the preceding claims, **characterised in that** it comprises a plurality of conduits (7) for compressed cleaning air, situated on the second side of the filter (1) and arranged radially with respect to the axis (x-x) of the chambers, which plurality of conduits (7) originate from a central manifold (8) having an inlet which is connected with a blower device (9, 10, 11) of compressed air for cleaning the filter (1);
each of the plurality of conduits (7) being laterally provided with one or more exit holes (13) for the compressed air, arranged in such a fashion that the conduit (7) is connected through the holes (13) with the chamber or chambers communicating with the second side of the filter (1).

6. The filter of claim 5, **characterised in that** the seal of the central chamber comprises a wall which is impermeable to gas, which wall partially delimits the central manifold of the compressed cleaning air and at least in part the conduits (7) for the compressed cleaning air.

7. The filter of any one of the preceding claims, **characterised in that** the central manifold (8), the conduits (7) for the compressed cleaning air which develop radially out of the manifold, and the seal (6) form a single block made from casting plastic material.
